# EUROPEAN PATENT SPECIFICATION

(11) **EP 1 489 820 B1**
(45) Date of publication and mention of the grant of the patent: **04.10.2006**
(21) Application number: 03013653.5
(22) Date of filing: 16.06.2003
(51) Int. Cl.: H04M 1/05, H04R 1/10

(54) **Headset wire and headset**
Kopfhörerdraht und Kopfhörer
Fil de casque d'écoute et casque d'écoute

(43) Date of publication of application: 22.12.2004
(73) Proprietor: BenQ Mobile GmbH & Co. OHG, 81667 München (DE)
(72) Inventor: Pedersen, Claus Bjerre, 9210 Aalborg SO (DK)
(74) Representative: Krombach, Rainer

(56) References cited:
- EP-A- 0 403 701
- DE-U- 20 014 526
- US-A- 5 677 948
- US-B1- 6 374 126
- PATENT ABSTRACTS OF JAPAN vol. 2002, no. 07, 3 July 2002 (2002-07-03) -& JP 2002 078060 A (ALPS ELECTRIC CO LTD), 15 March 2002 (2002-03-15)

## Description

Many modern portable electronic devices are intended or suitable for recording or playback of acoustic signals. For many applications it is necessary to have a headset, typically comprising one or more loudspeakers in the form of one or two earplugs, or one or more microphones. For example, by using a headset, a user of mobile phones can enjoy more privacy when the others around him- or herself cannot hear the telephone conversation. Further, by using a suitable microphone in the headset, the telephone call can still be successful even though there would be much background noise.

The loudspeaker and microphone are usually connected to the portable electronic device by using a headset wire which usually includes two pair of wires, each pair usually packed together within one insulator. One annoying feature of two wire pairs is that they get easily entangled. Because the headset is not always used, e.g. when the device is being transported, the headset wire is put into the pocket of the user. One obvious solution would be to include a reel to the device or for the headset, but this cannot be accepted if also an attractive design is desired.

US 6,374,126 B1 shows a hands-free headset that includes first and second earpieces. The headset includes two retractable cords which engage with a portable communications device. A sliding grommet attached to the retractable cords controls the separation of the cords and facilitates the two cords being reeled into a common cord reel.

The English abstract of JP 2002078060 shows a strap comprising two connection members connected to each other in a loop which allows a cord section to act like a strap of a mobile phone. The connection members not connected in a loop but connected in a straight line act like part of a connection cord provided to a headphone.

An object of the invention is to provide such a headset wire for a portable electronic device that suffers essentially less from the phenomenon of entangled wires. This can be achieved with a headset wire as described in the independent claim. By using means according to the invention, the user can reduce the entangling wires to one, thereby enhancing the comfort of use of the headset wire.

The dependent claims describe various embodiments of the invention.

According to a further aspect of the present invention, the position of the slidable connecting means in the headset wire can be made adjustable, thereby enabling the sharing of one headset wire between users of different size.

In the following, the invention will be described in more detail with reference to the examples in the appended drawings 1 to 3, wherein:
- Figure 1: shows a portable electronic device together with a headset wire according to a representative example ;
- Figure 2: shows a headset wire where the slidable connecting means includes a zipper; and
- Figure 3 a: headset wire where the slidable connecting means includes a cable lock adapted to lock a spring-like element arranged around the first and second pair of wires.

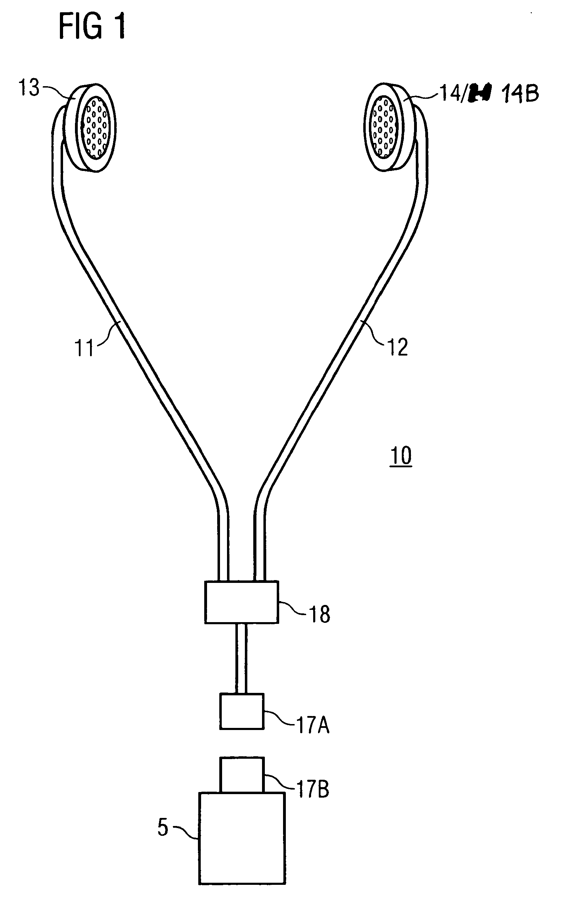

Figure 1 shows a portable electronic device 5 together with a headset wire 10 according to a representative example. The headset wire 10 can be connected to the portable electronic device 5 by plugging a connector 17A to a connector socket 17B. The headset wire 10 includes two pairs 11, 12 of wires.

The first pair 11 of wires is connected to a first loudspeaker 13, and the second pair 12 is connected to a second loudspeaker 14. Instead of having an "earphone" -like solution, the second loudspeaker 14 can be replaced by a microphone 14B. Headsets of the former type are normally used as stereo earphones, for example for portable CD or MP3 players, portable radios and so forth. Headsets of the latter type are normally used for mobile phones and other wireless terminals. Further, the headset wire 10 includes slidable connecting means 18 adapted to releasably bring the first and the second pair 11, 12 of wires closer to each other or to releasably join them together.

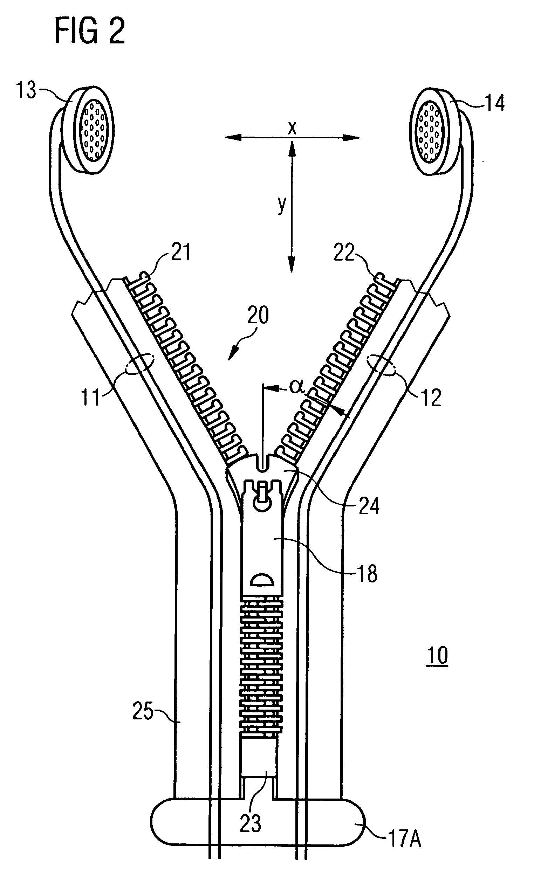

Figure 2 shows a headset wire 10 according to an embodiment of the present invention where the slidable connecting means includes a zipper 20. The zipper 20 includes two rows of hooks 21, 22 which are fastened to an extension of isolating material 25 of the isolating material around the wire pairs 11, 12. Typically, this is some polymer material but can be of practically any isolating material the elastic properties of which are satisfactory for the purpose.

The hooks 21, 22 are, as in a common zipper, joined together to form a fastener by means of a conventional slider or slider means 24 provided with a usual operating tab 18. The slider means 24 usually includes a Y-shape channel through which the hooks 21, 22 pass. At the end of the zipper 20 there is an end member 23 prohibiting the slider means 24 from moving beyond the area where hooks 21, 22 are located. The end member 23 can be integrated to connector 17A, or it can be a separate member.

The hooks 21, 22 can also be manufactured as recesses in the isolation in the wire.

The user can adjust the size X, Y and the angle α of the headset by selecting the position of the slider means 24.

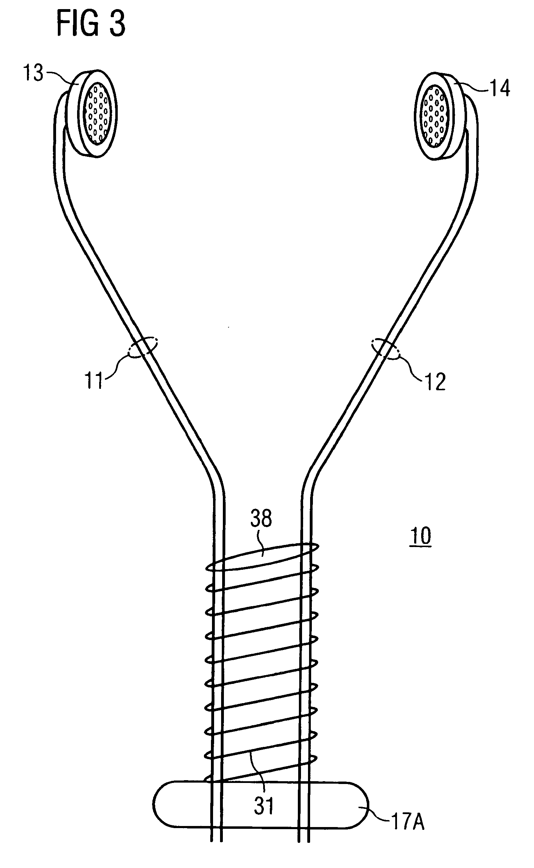

Figure 3 shows a headset wire 10 according to another embodiment of the present invention where the slidable connecting means 18 includes a cable lock 38 adapted to lock a spring-like element 31 arranged around the first and second pair 11, 12 of wires. Here the spring-like (i.e. spiral) element 31 is fastened at its lower end to the connector 17A. Now instead of opening or closing the zipper, the spring-like element 31 is either compressed or elongated. Therefore it provides a returning force helping the adjustment of a normal position. The user can adjust the size X, Y and the angle α of the headset by selecting the position of the cable lock 38 like in the example shown in Figure 2. Typically this normal position can be divided in different size classes, typically used in clothing industry, such as S, M, L, XL, varying with the size of the user.

The size variation applies to the example of Figure 2 as well, and the embodiments of Figure 2 and 3 need not be considered separately but they can be implemented together in a headset wire as well.

Although the invention was described above with reference to the examples shown in the appended drawings, it is obvious that the invention is not limited to these but may be modified by those skilled in the art without difference from the scope of the invention.

## Claims

1. A headset wire (10) for a portable electronic device (5), comprising: a first pair of wires (11) electrically connectable to a first loudspeaker (13); a second pair of wires (12) electrically connectable to a microphone (14B) or to a second loudspeaker (14), and a slidable connecting means (18, 38) adapted to releasably bring the first and the second pair of wires (11, 12) closer to each other or to releasably join them together,
**characterized in that**:
said slidable connecting means (18) comprises a zipper, or said slidable connecting means (18, 38) includes a cable lock (38) adapted to lock a spring-like element (31) arranged around the first and second pair of wires (11, 12).

2. A headset wire (10) according to claim 1,
**wherein**: the first and the second pair of wires (11, 12) further comprise hooks (21, 22) adapted to stick together or to release from each other responsive to a movement of a slider element (24) of the zipper (18) or of the cable lock (38).

3. A headset wire (10) according to claim 2,
**wherein**: the first and the second pair of wires (11, 12) are connected to the hooks (21, 22) by using a same polymer material used for providing electrical insulation for the first and second pair of wires (11, 12).

4. A headset wire (10) according to any one of the preceding claims,
**wherein**: the movement of the zipper (18) or the cable lock (38) is restricted by a connector (17A) for connecting the headset wire (10) to a portable electronic device (5).

## Patentansprüche

1. Kopfhörerdraht (10) für ein tragbares elektronisches Gerät (5), der umfasst: ein erstes Leiterpaar (11), das elektrisch mit einem ersten Lautsprecher (13) verbunden werden kann; ein zweites Leiterpaar (12), das elektrisch mit einem Mikrofon (14B) oder mit einem zweiten Lautsprecher (14) verbunden werden kann, sowie ein verschiebbares Verbindungselement (18, 38), das dafür ausgelegt ist, das erste und das zweite Leiterpaar (11, 12) auf eine lösbare Art und Weise näher zueinander zu führen oder sie auf eine lösbare Art und Weise miteinander zu verbinden;
**dadurch gekennzeichnet, dass**:
das besagte verschiebbare Verbindungselement (18) einen Reißverschluss umfasst, oder dass das besagte verschiebbare Verbindungselement (18, 38) eine Kabelverriegelung (38) umfasst, die dafür ausgelegt ist, ein spiralfederartiges Element (31), das rund um das erste und das zweite Leiterpaar (11, 12) herum angeordnet ist, zu verriegeln.

2. Kopfhörerdraht (10) gemäß Anspruch 1,
wobei: das erste und das zweite Leiterpaar (11, 12) ferner Haken (21, 22) umfassen, die dafür ausgelegt sind, miteinander in Eingriff gebracht oder voneinander gelöst zu werden als Reaktion auf eine Verschiebung eines Schieberelements (24) des Reißverschlusses (18) oder der Kabelverriegelung (38).

3. Kopfhörerdraht (10) gemäß Anspruch 2,
wobei: das erste und das zweite Leiterpaar (11, 12) mit den Haken (21, 22) verbunden sind, indem dasselbe polymere Material verwendet wird, das zur Herstellung der elektrischen Isolierung für das erste und das zweite Leiterpaar (11, 12) benutzt wurde.

4. Kopfhörerdraht (10) gemäß einem der vorstehenden Ansprüche,
wobei: die Verschiebung des Reißverschlusses (18) oder der Kabelverrieglung (38) durch einen Stecker (17A) zum Anschließen des Kopfhörerdrahts (10) an ein tragbares elektronisches Gerät (5) eingeschränkt wird.

## Revendications

1. Fil de casque d'écoute (10) pour un dispositif électronique portable (5), comprenant : une première paire de fils (11) pouvant être reliée électriquement à un premier haut-parleur (13); une seconde paire de fils (12) pouvant être reliée électriquement à un microphone (14B) ou à un second haut-parleur (14), et un moyen de connexion coulissant (18, 38) conçu pour rapprocher de manière libérable l'une de l'autre la première paire et la seconde paire de fils (11, 12) ou pour les réunir de manière libérable,
**caractérisé en ce que** :
ledit moyen de connexion coulissant (18) comprend une fermeture à glissière, ou ledit moyen de connexion coulissant (18, 38) comprend un verrouillage de câble (38) conçu pour verrouiller un élément de type ressort (31) disposé autour de la première et de la seconde paire de fils (11, 12).

2. Fil de casque d'écoute (10) selon la revendication 1,
dans lequel : la première et la seconde paire de fils (11, 12) comprennent en outre des crochets (21, 22) conçus pour s'accrocher les uns aux autres ou pour se libérer les uns des autres en réponse à un déplacement d'un élément formant glissière (24) de la fermeture à glissière (18) ou du verrouillage de câble (38).

3. Fil de casque d'écoute (10) selon la revendication 2,
dans lequel : la première et la seconde paire de fils (11, 12) sont reliées aux crochets (21, 22) au moyen du même matériau polymère que celui utilisé pour assurer l'isolation électrique de la première et de la seconde paire de fils (11, 12) .

4. Fil de casque d'écoute (10) selon l'une quelconque des revendications précédentes,
dans lequel : le déplacement de la fermeture à glissière (18) ou du verrouillage de câble (38) est limité par un connecteur (17A) destiné à relier le fil de casque d'écoute (10) à un dispositif électronique portable (5).
